# EUROPÄISCHE PATENTANMELDUNG

(11) **EP 1 387 103 A1**
(43) Veröffentlichungstag der Anmeldung: **04.02.2004**
(21) Anmeldenummer: 03014784.7
(22) Anmeldetag: 28.06.2003
(51) Int. Cl.: F16D 3/50

(54) **Elastische Wellenkupplung und Verfahren zum Versehen wenigstens eines Kupplungselementes mit einer Alterungsschutzschicht**

(30) Priorität: 29.07.2002 DE 10235508
(71) Anmelder: Stromag AG, 59425 Unna (DE)
(72) Erfinder: Bittner, Heinrich, 59174 Kamen (DE); Dorok, Günter, 59174 Kamen (DE); Kerstin, Gunter, 59494 Soest (DE)
(74) Vertreter: Patentanwälte , Ruff, Wilhelm, Beier, Dauster & Partner

(57) **Zusammenfassung**

2.1. Eine elastische Wellenkupplung mit wenigstens einem Kupplungselement aus einem Elastomermaterial sowie ein Verfahren zum Versehen eines solchen Kupplungselementes mit einer Alterungsschutzschicht sind bekannt.
2.2. Erfindungsgemäß ist die Alterungsschutzschicht durch eine im montierten Zustand der Wellenkupplung manuell aufgetragene, elastomerverträgliche Schutzpaste gebildet.
2.3. Einsatz in Antriebs- und Kraftübertragungssträngen von Maschinen oder Wasserfahrzeugen.

## Beschreibung

Die Erfindung betrifft eine elastische Wellenkupplung mit wenigstens einem Kupplungselement aus einem Elastomermaterial, das mit einer Alterungsschutzschicht versehen ist, sowie ein Verfahren zum Versehen wenigstens eines Kupplungselementes aus einem Elastomermaterial mit einer Alterungsschutzschicht.

Aus der WO 98/45610 ist eine elastische Wellenkupplung bekannt, bei der die Elastomer-Kupplungselemente, d.h. die Übertragungselemente, in ihrem Oberflächenbereich mit einer Alterungsschutzschicht versehen sind. Die Alterungsschutzschicht wird auf die Oberflächen der Kupplungselemente aufvulkanisiert.

Aufgabe der Erfindung ist es, eine elastische Wellenkupplung sowie ein Verfahren der eingangs genannten Art zu schaffen, die mit einfachen Mitteln einen Alterungsschutz für die Elastomerelemente erzielt.

Diese Aufgabe wird dadurch gelöst, dass die Alterungsschutzschicht durch eine manuell aufgestrichene, elastomerverträgliche Schutzpaste gebildet ist. Hierdurch wird mit äußerst einfachen Mitteln ein wirkungsvoller Alterungsschutz für das wenigstens eine Elastomerelement erzielt. Da die Schutzpaste in einfacher Weise manuell aufgetragen wird, ist der Alterungsschutz mit äußerst geringen Kosten erreichbar. Da die Schutzpaste elastomerverträglich ist und nach Fertigvulkanisierung des wenigstens einen Kupplungselementes oder nachträglich im bereits montierten Zustand der Wellenkupplung aufgebracht wird, werden die Materialeigenschaften der Elastomer-Kupplungselemente nicht beeinflusst. Durch die erfindungsgemäße Lösung ist insbesondere nachträglich ein Alterungsschutz auch bei bereits in Betrieb genommenen Wellenkupplungen mit geringem Aufwand erreichbar.

In Ausgestaltung der Erfindung ist die Schutzpaste medienbeständig sowie alterungsbeständig und nicht harzend ausgebildet. Diese Eigenschaften ermöglichen den Alterungsschutz der Elastomer-Kupplungselemente. Durch die Schutzpaste wird verhindert, dass Sauerstoff an die Oberfläche der Elastomer-Kupplungselemente gelangt und so die Eigenschaften des Elastomers verändern kann.

In weiterer Ausgestaltung der Erfindung ist als Schutzpaste eine Silikon-Fettpaste vorgesehen. Diese Silikon-Fettpaste hat sich als besonders geeignet für die Erzielung eines Alterungsschutzes bei Elastomer-Kupplungselementen erwiesen.

Die der Erfindung zugrundeliegende Aufgabe wird für das Verfahren dadurch gelöst, dass das Kupplungselement in einer Wellenkupplung und die Wellenkupplung an ihrem Einsatzort montiert werden, und dass vor, während oder nach dem Montieren der Wellenkupplung auf die Oberfläche des Kupplungselementes manuell eine Schutzpaste aufgestrichen wird.

Eine elastische Wellenkupplung ist in grundsätzlich bekannter Weise mit einem oder mehreren Kupplungselementen aus einem Elastomermaterial versehen, die entsprechende Kraft- oder Drehmomentübertragungen eines ersten Kupplungsteiles auf einen zweiten Kupplungsteil übernehmen. Durch Sauerstoffeinwirkung, d.h. durch den Betrieb der Wellenkupplung in normaler Atmosphäre, können sich die Eigenschaften des Elastomermaterials verändern, wodurch die Kupplungselemente aus dem Elastomermaterial einer frühzeitigen Alterung unterworfen sein können. Eine derartige vorzeitige Alterung kann zu einer Fehlfunktion oder zu einem Ausfall der Wellenkupplung führen.

Um eine Alterung des Elastomermaterials der Kupplungselemente zu vermeiden, ist eine elastomerverträgliche, medien- und alterungsbeständige sowie nicht harzende Schutzpaste vorgesehen, die vorzugsweise als Silikon-Fettpaste ausgeführt ist. Diese wird im fertig vulkanisierten Zustand der Kupplungselemente vor dem Montieren innerhalb der Wellenkupplung, bei der Montage der Wellenkupplung oder gegebenenfalls bereits im betriebsfertig montierten Zustand der Wellenkupplung innerhalb eines entsprechenden Antriebs- oder Kraftübertragungsstranges auf die Oberflächen der Kupplungselemente aufgebracht. Das Aufbringen erfolgt in einfacher Weise durch manuelles Auftragen, insbesondere durch Aufstreichen oder Aufsprühen der Schutzpaste auf die entsprechenden Oberflächen der Kupplungselemente. Das Auftragen muss so erfolgen, dass die Schutzpaste über die gesamte Oberfläche eine durchgängige Schicht mit einer so ausreichenden Dicke bildet, dass auch im Betrieb der Wellenkupplung keine Löcher, Spalte oder ähnliches in dieser Schutzschicht entstehen können.

## Patentansprüche

1. Elastische Wellenkupplung mit wenigstens einem Kupplungselement aus einem Elastomermaterial, das mit einer Alterungsschutzschicht versehen ist, **dadurch gekennzeichnet, dass** die Alterungsschutzschicht durch eine manuell aufgetragene, elastomerverträgliche Schutzpaste gebildet ist.

2. Wellenkupplung nach Anspruch 1, **dadurch gekennzeichnet, dass** die Schutzpaste medien- und alterungsbeständig sowie nicht harzend ausgebildet ist.

3. Wellenkupplung nach Anspruch 2, **dadurch gekennzeichnet, dass** als Schutzpaste eine Silikon-Fettpaste vorgesehen ist.

4. Verfahren zum Versehen wenigstens eines Kupplungselementes aus einem Elastomermaterial mit einer Alterungsschutzschicht, **dadurch gekennzeichnet, dass** das Kupplungselement in einer Wellenkupplung und die Wellenkupplung an ihrem Einsatzort montiert werden, und dass vor, während oder nach dem Montieren der Wellenkupplung auf die Oberfläche des Kupplungselementes manuell eine Schutzpaste aufgetragen wird.

5. Vorrichtung nach Anspruch 4, **dadurch gekennzeichnet, dass** das Auftragen der Schutzpaste durch Aufstreichen oder Aufsprühen erfolgt.
